# EUROPEAN PATENT SPECIFICATION

(11) **EP 4 613 524 B1**
(45) Date of publication and mention of the grant of the patent: **13.05.2026**
(21) Application number: 24161251.4
(22) Date of filing: 04.03.2024
(51) Int. Cl.: B60K 1/00

(54) **THERMAL MANAGEMENT DEVICE AND METHOD FOR ADAPTING A TEMPERATURE OF AN ENERGY STORAGE UNIT OF A VEHICLE**
WÄRMEMANAGEMENTVORRICHTUNG UND VERFAHREN ZUM ANPASSEN EINER TEMPERATUR EINES ENERGIESPEICHERS EINES FAHRZEUGS
DISPOSITIF DE GESTION THERMIQUE ET PROCÉDÉ D'ADAPTATION D'UNE TEMPÉRATURE D'UNE UNITÉ DE STOCKAGE D'ÉNERGIE D'UN VÉHICULE

(43) Date of publication of application: 10.09.2025
(73) Proprietor: Volvo Car Corporation, 405 31 Göteborg (SE)
(72) Inventor: OLSEN, Hans Erik, 40531 Göteborg (SE); BERGENBLOCK, Tobias, 40531 Göteborg (SE); GRAPE, Viktor, 40531 Göteborg (SE)
(74) Representative: Kransell & Wennborg KB

(56) References cited:
- DE-A1- 102015 208 438
- US-A1- 2023 033 307
- US-B2- 10 525 786

## Description

### TECHNICAL FIELD

The present disclosure relates to a device for adapting a temperature of an energy storage unit of a vehicle.

The present disclosure further relates to an energy storage arrangement for a vehicle comprising such a device and to a vehicle comprising such energy storage arrangement.

The present disclosure further relates to a method for adapting a temperature of an energy storage unit of a vehicle, wherein the energy storage unit is thermally coupled to such a device.

### BACKGROUND ART

In today's electric vehicles, thermal management of the vehicle battery is crucial as it influences a battery capacity, charging times and a maximum operating range or maximum driving range of the vehicle. Vehicle batteries tend to lose heat in an uncontrolled manner to an environment or surrounding of a vehicle. For instance, vehicle batteries are often arranged in the floor region of a vehicle and a bottom side of the battery and faces the ground beneath the vehicle, and an airstream flowing along the floor, e.g. during operation of the vehicle, may lead to unwanted heat losses. To mitigate such a heat loss of the vehicle battery to the environment, insulation layers are often provided in between the battery surface and the outer environment to thermally insulate the battery. However, the provision of such insulations is often insufficient. Furthermore, such insulating elements may hinder a sophisticated thermal management of the battery.
Reference document US 2023/0033307 A1 relates to a heating and cooling system of a vehicle.

### SUMMARY

It is therefore an objective of the present disclosure to provide an improved vehicle battery thermal management system and an associated method.

The problem is at least partially solved or alleviated by the subject matter of a device according to claim 1 for adapting a temperature of an energy storage unit of a vehicle, an energy storage arrangement according to claim 10 for a vehicle, a vehicle according to claim 11, and a method according to claim 12 for adapting a temperature of an energy storage unit of a vehicle, wherein further preferred examples are incorporated in the dependent claims.

According to a first aspect, there is provided a device for adapting a temperature of an energy storage unit of a vehicle.

The device comprises a first element thermally couplable to the energy storage unit.

The device further comprises a second element thermally couplable to a surrounding of the vehicle.

Further, the first element is coupled to the second element to allow an energy transfer between the surrounding of the vehicle and the energy storage unit via the first element and the second element.

Thus, an energy storage unit of a vehicle may be set to a desirable temperature by heating or cooling the energy storage unit based on a distinct energy transfer from the surrounding of the vehicle to the energy storage unit or from the energy storage unit to the surrounding of the vehicle. Thus, the surrounding of the vehicle may be flexibly employed as a heat sink or heat source, as desired. The device of the present disclosure allows to control the associated heat flow.

An energy storage unit may include one or more devices that can store electric energy, e.g. to drive or propel a vehicle. For instance, an energy storage unit may include one or more battery cells. An alternative term for an energy storage unit of a vehicle may be a vehicle battery.

The device may include one or more first and second elements. An element according to the present disclosure may be generally formed and arranged for allowing for a thermal energy transfer with another corresponding element. The first and second elements may comprise a material that is suitable for a thermal energy exchange, such as for instance metal materials or thermally conducting plastics.

In some examples, the first and second elements are made of the same material. In other examples, the first and second elements are made of different materials.

In some examples, a thermal coupling between the first element and the energy storage unit may be achieved by an immediate or direct contact of the first element and the energy storage unit. In some examples, the thermal coupling between the first element and the energy storage unit may be achieved via further thermal energy conducting components arranged in between the first element and the energy storage unit. The components may accordingly also comprise materials suitable for allowing a thermal energy or heat exchange or conduction.

In some examples, a thermal coupling between the second element and the surrounding of the vehicle may comprise an immediate or direct contact between the second element and the surrounding of the vehicle. In some examples, the thermal coupling between the second element and the surrounding of the vehicle may be achieved via further components arranged in between the second element and the surrounding of the vehicle. The components may accordingly also comprise materials suitable for allowing a thermal energy or heat exchange or conduction.

A surrounding of the vehicle may generally refer to any environmental space outside of a vehicle. For instance, the surrounding may include the space between the underside of the vehicle and the ground upon which the vehicle operates.

A coupling of the first element and the second element may be understood as allowing an energy transfer from the first element to the second element and vice versa. The coupling may allow for a transfer of a certain type of energy from the first element to the second element and vice versa. In some examples, the coupling between the first element and the second element may include an at least partial or intermediate conversion of energy. This means that the energy provided by one of the first or second element having one type is converted into another type of energy. For example, thermal energy may be converted into electrical or chemical energy or vice versa.

The energy transfer between the surrounding of the vehicle and energy storage unit may, in some examples, be controlled based on temperatures of one or more of the energy storage unit, the first element, the second element and/or the surrounding of the vehicle.

For instance, the energy transfer may be controlled such that energy is transferred from the surrounding of the vehicle to the energy storage unit to heat the energy storage unit via the second and first elements. Or the energy transfer may be controlled such that energy is transferred from the energy storage unit to the surrounding of the vehicle via the first and second elements. In other words, a direction of the energy transfer may be selected, as desired.

However, in some examples, only one direction of energy transfer may be provided at the device to allow for instance only a heating or only a cooling of the energy storage unit.

In one example, the first element and the second element are thermally coupled.

Thus, a simple and reliable heating or cooling of the energy storage unit may be achieved by transferring thermal energy away from the energy storage unit towards the surrounding of the vehicle or by transferring thermal energy from the surrounding of the vehicle towards the energy storage unit, as desired.

A thermal coupling may be generally understood as an coupling where the thermal energy of the first or second element is particularly not converted into another type of energy, such as electrical or chemical energy. Thus, the thermal energy may be transferred either directly or indirectly between the first element and the second element.

In one example, a direct thermal energy transfer may be for instance realized by transferring the thermal energy directly from the first to second element via a heat transporting fluid transferred from one element to the other. In some examples, an indirect thermal energy transfer may be realized via an intermediate system, such as a heat pump unit, a heat exchange unit or heat exchanger, as will be described further below in greater detail.

In one example, the first element comprises a first plate-shaped portion arrangeable adjacent to the energy storage unit, the second element comprises a second plate-shaped portion arrangeable adjacent to the surrounding of the vehicle, and the first plate-shaped portion and the second plate-shaped portion are arranged in a stacked manner.

The plate-shaped portions may accordingly enlarge a surface for exchanging a comparatively large amount of thermal energy between the first element and second element, and also further with the energy storage unit and the surrounding of the vehicle. Stacking the first plate-shaped portion and the second plate-shaped portion allows for a compact design of the device of the present disclosure. Moreover, stacking the first plate-shaped portion and the second plate-shaped portion is advantageous from a packaging point of view of the vehicle.

In some examples, an adjacent arrangement may include a direct contact of the first plate-shaped portion and the energy storage unit. However, the adjacent arrangement may also include an arrangement of the first plate-shaped portion in the near vicinity of the energy storage unit, i.e. without a direct contact. That is, in some examples, a gap may be provided between the first plate-shaped portion and the energy storage unit.

In some examples, further thermal energy transferring elements are provided between the first plate-shaped portion and the energy storage unit.

Likewise, an adjacent arrangement may include a direct contact of the second plate-shaped portion and the surrounding of the vehicle. However, the adjacent arrangement may also include an arrangement of the second plate-shaped portion in the near vicinity of the surrounding of the vehicle, i.e. without a direct contact. That is, in some examples, a distance may be provided between the second plate-shaped portion and the surrounding of the vehicle.

In some examples, the second plate-shaped portion is provided with a protective, thermal energy transferring, layer, arranged between the second plate-shaped portion and the surrounding of the vehicle. The protective layer may be configured to both provide protection against for example road bumps, rock chips and stones on a road, and to efficiently conduct heat to and from the second plate-shaped portion.

A plate-shape as noted herein may include an essentially two-dimensional extension. In other words, a plate-shaped portion may have a first main extension in a first spatial direction, a second main extension in a second spatial direction, wherein the second spatial direction is perpendicular to the first spatial direction, and only a minor extension in a third spatial direction perpendicular to the first and second spatial directions. In other words, the plate-shaped portion may have only a small thickness or width compared to its other two main extensions. The thickness of each plate-shaped portion may vary or may be constant along the element.

In some examples, the first plate-shaped portion may extend in a plane parallel to an outer surface of the energy storage unit. The first plate-shaped portion may comprise an outer first surface facing the energy storage unit and an opposite outer second surface.

In some examples, the second surface of the first plate-shaped portion may face the second plate-shaped portion.

In some examples, the second plate-shaped portion may extent in a plane parallel to an outer surface of the vehicle. The second plate-shaped portion may comprise an outer first surface facing the surrounding (directly or via some intermediate layer such as the protective layer referred to above) of the vehicle and an opposite outer second surface.

In some examples, the second surface of the second plate-shaped portion may face the first plate-shaped portion.

In some examples, the second plate-shaped portion may extend in a plane parallel to a bottom surface of the vehicle, which surface is in contact with the surrounding of the vehicle.

In some examples, the second plate-shaped portion may form a portion of the outer surface of the vehicle, for instance the bottom surface of the vehicle.

In some examples, one or more of the plate-shaped portions may comprise a rectangular shape. However, in other examples, the plate-shaped portions may be formed in a different shape, such as circular, oval, or any other arbitrary shape. As will be appreciated by a person skilled in the art, the shapes of the first and second plate-shaped portions are a matter of design and/or functionality in respect to the particular implementation of the device or energy storage arrangement of the disclosure, and is for example dependent on the properties and design of the vehicle and/or energy storage unit.

A stacked arrangement may be understood as an arrangement, wherein the first plate-shaped portion and the second plate-shaped portion are arranged one above the other along a stacking direction. The stacking direction may correspond to the third spatial direction as explained above. In some examples, the stacking direction may be an essentially vertical direction. Stacking in the sense of the present disclosure may not be construed to an immediate contacting arrangement, for instance of the first and second plate-shaped portions. Quite to the contrary, in some examples a gap or further elements may be provided between stacked elements.

In some examples, the first plate-shaped portion and the second plate shaped portion are arranged essentially parallel to each other.

In one example, the device further comprises at least one thermal barrier arranged between the first element and the second element, wherein the thermal barrier is adapted to prevent a direct heat exchange between the first element and the second element.

Thus, the amount and direction of thermal energy flow from the first element to the second element may be directed and controlled as desired. Thus, the device may allow for a directed thermal energy flow along a path that is different from a direct exchange of thermal energy between the first and the second element. This may allow to design more complex and sophisticated heat exchange set-ups. More generally speaking, due to the thermal barrier, one or more paths of heat exchange between the first element and the second element may be blocked. At the same time, the first element is coupled to the second element to allow an energy transfer between the surrounding of the vehicle and the energy storage unit via the first element and the second element. For the latter, a different path of energy transfer, e.g. heat transfer, is used which is controllable.

A direct heat exchange may be understood as an immediate heat exchange between adjacent first and second elements, which may be for instance along a shortest distance between the first and the second elements. The direct heat exchange may occur with or without further elements in between the first and second elements. A thermal barrier may accordingly include an element that is arranged spatially between the first element and the second element to block at least partially the direct thermal energy transfer.

A thermal barrier may comprise, or be formed of, a material that has thermal energy insulating properties, such as a rubber material, a plastics material or any further material that is suitable to mitigate or fully block an energy transfer between the first element and the second element.

In some examples, the thermal barrier may be arranged in a stacked manner between the first element and the second element. Further, the thermal barrier may comprise any desired shape, including in particular a desired thickness, to mitigate or prevent an energy transfer between the first element and the second element.

In some examples, the thermal barrier may be dimensioned to cover at least partially an outer surface of one of the first element or the second element facing a corresponding opposing outer surface of the other one of the at least one of the first element or second element.

In one example, the first element comprises at least one first fluid flow channel for guiding at least one first thermal energy transporting fluid, and the second element comprises at least one second fluid flow channel for guiding at least one second thermal energy transporting fluid.

Thus, an increased and guided thermal energy flow may be provided, which may advantageously allow for a directed heat exchange from the energy storage unit to the surrounding of the vehicle and vice versa. Moreover, this may be advantageous to allow for a directed heat exchange between the first element and the second element. Providing at least one fluid flow channel for guiding at least one thermal energy transporting fluid has the advantage that the energy storage unit of the vehicle may be reliably cooled or heated. Consequently, the energy storage unit may be operated in a reliable manner.

One or more fluid flow channels may be provided at or in the first and second elements.

A fluid flow channel may be understood as a continuous hollow space, which may be adapted to receive and guide respective thermal energy transporting fluid from one location to another location.

In some examples, the first and second elements may comprise an inlet of the fluid flow channel for receiving the thermal energy transporting fluid. In some examples, the first and second elements may likewise comprise an outlet for draining the thermal energy transporting fluid from the fluid flow channel.

Each fluid flow channel may comprise any suitable shape such as a rectangular or oval or circular cross-sectional shape and may run in one or more straight lines or turns inside and along the first element and the second element to cover at least a partial area of the first element and the second element. Generally, the fluid flow channel may be suitably dimensioned to allow guiding the thermal energy transporting fluid through it and may be for instance adapted to the distinct thermal energy transporting fluid employed. The shape and dimension of the fluid flow channel may also depend on the thermal energy transporting capacities needed to cool or heat the energy storage unit of the vehicle and/or by the capabilities of the heat pump unit, when present. In some examples, the fluid flow channels of the first element and the second element may be similarly or differently formed and shaped.

The thermal energy transporting fluid may include one or more of a gas or liquid that is generally employable for thermal energy absorption, transport and dissipation. Non-limiting examples may include water, Mono-ethylene glycol, Propylene glycol and/or synthetic oils and corresponding mixtures thereof. In some examples, the first element and the second element may comprise the same type of thermal energy transporting fluid. In some examples, the first and second element may comprise a different type of thermal energy transporting fluid.

In some examples, further means of cooling or heating the energy storage unit may be eliminated or reduced in size and the cooling or heating may be only or mainly realized via the fluid flow channels. Furthermore, due to the provision of the at least one fluid flow channel and the cooling or heating realized therewith, highly performant energy storage units may be used.

For instance, highly performant energy storage units often generate comparatively high amounts of heat that needs to be withdrawn in order to reliably operate the energy storage unit. In this context, a highly performant energy storage unit may be formed that is highly compact. These circumstances may facilitate an installation and arrangement of the energy storage unit in a restraint space and/or in a space-saving manner.

In some examples, a flow of the energy transporting fluids along certain directions may be achieved by providing and controlling respective one or more corresponding fluid pumps and valves. The flow intensity may be accordingly adjusted as needed, and also the flow direction may be suitably set. The pumps may be for instance controlled by a data computing means or data processing apparatus of the vehicle. Such data computing means or data processing apparatus may for example be a Vehicle Control Unit (VCU), Engine Control Unit (VCU), Powertrain Control Unit (PCU), or one or more Application Specific Integrated Circuit(s) (ASIC(s)).

In some examples, the fluid pumps may be accordingly controlled to enable a unidirectional or bi-directional, e.g. inversed, fluid flow.

In one example, the first fluid flow channel and the second fluid flow channel are in fluid connection.

Thus, an efficient thermal energy transfer from one of the first fluid flow channel and the second fluid flow channel to the other one of the first fluid flow channel and the second fluid flow channel can be provided. Furthermore, the transport of the thermal energy may be accordingly guided in a desired manner from the first fluid flow channel to the second fluid flow channel and vice versa. Thus, an increased flexibility in the design and arrangement of the first element and/or the second element may be achieved. Furthermore, thermal energy may be transported along larger flow paths between the first element and the second element.

A fluid connection may generally include that a fluid can be transferred from one of the first or second fluid channels to the other one of the first and second flow channels. Thus, the first and second fluid flow channels may be accordingly fluidly coupled.

In some examples, a fluid connection may include that the first element and the second amended comprise the same heat transporting fluid flowing from one of the first element and the second element to the other one of the first element and the second element and back in a circulating manner.

In some examples, thermal energy may be picked-up by a thermal energy transporting fluid at the first fluid flow channel of the first element and may then be transported via fluid flow to the second fluid flow channel of the second element. At the second element, the thermal energy may be accordingly dissipated and the accordingly cooled thermal energy transporting fluid may be guided back to the first element.

In some examples, thermal energy may be picked up by the same thermal energy transporting fluid at the second fluid flow channel of the second element and may then be transported via a fluid flow to the first fluid flow channel of the first element. At the first element, the thermal energy may be accordingly dissipated, and the cooled thermal energy transporting fluid may then be guided back to the second element.

In some examples, a fluid flow may be controlled by correspondingly formed and/or controlled interfaces for inflow and outflow of the thermal energy transporting fluid to the respective first fluid flow channel and second fluid flow channel.

In some examples, the flow rate may be controlled by valves or constrictions etc., suitable to set or adjust a flow rate of the first thermal energy transporting fluid and/or the second thermal energy transporting fluid.

In one example, the first element and the second element are thermally coupled via a heat pump unit.

Thus, the amount of thermal energy to be transferred may be set and adjusted by the heat pump unit. This may increase the flexibility in setup and arrangement of the device in a vehicle, as the amount of thermal energy transported between the first element and the second element may be additionally adapted by the configuration of the heat pump unit. This may increase the flexibility in the choice of a design or configuration of one or both of the first element at the second element. Accordingly, a control of the thermal energy transfer from the first element to the second element may be enhanced. In particular, the thermal energy transfer may be set by controlling one or more elements of the heat pump unit.

A heat pump unit may generally include any heat pump devices or systems allowing for a transfer of thermal energy from one location to another location in a distinct direction. For instance, the heat pump unit may transport thermal energy from a first element to the second element. Or the heat pump unit may transport thermal energy from the second element to the first element. It is also possible to have a heat pump unit that is configured to selectively transport thermal energy from the first element to the second element and from the second element to the first element.

In some examples, the heat pump unit may comprise a fluid flow circuit comprising a heat pump fluid, which may be different to a first thermal energy transporting fluid and/or the second thermal energy transporting fluid. In other words, a heat pump circuit may be fluidly decoupled from a first fluid flow circuit and a second fluid flow circuit of the first and second elements.

In some examples, the heat pump fluid may be the same as a thermal energy transporting fluid as provided in the first or second element. In some examples, the heat pump fluid may be different to a thermal energy transporting fluid of the first or second element.

In one example, the first fluid flow channel and the second fluid flow channel are thermally coupled via the heat pump unit.

Accordingly, an increased thermal energy transfer between the first thermal energy transporting fluid accommodated in the first flow channel and the second thermal energy transporting fluid accommodated in the second flow channel may be achieved. The heat pump unit may accordingly allow to transfer a distinct amount of thermal energy between the respective first and second thermal energy transporting fluids. Both directions of heat transfer may be possible.

A thermal coupling may be achieved by providing respective means for thermal energy transfer between the energy transporting fluids of the first fluid flow channel and the second fluid flow channel and a thermal energy transporting heat pump fluid. For instance, a first thermal energy transporting fluid may flow from the first flow channel to a first thermal energy exchanging device, which may allow a heat exchange between the first thermal energy transporting fluid and the heat pump fluid. In some examples, the first thermal energy exchanging device may be for instance a heat exchanger coupled to an evaporator or a heat exchanger coupled to a condenser, e.g. as described in further detail below.

Likewise, a second thermal energy transporting fluid may flow from the second flow channel to a second thermal energy exchanging device, which may allow a heat exchange between the second thermal energy transporting fluid and the heat pump fluid. In some examples, the second thermal energy exchanging device may be for instance a heat exchanger coupled to an evaporator or a heat exchanger coupled to a condenser, e.g. as described in further detail below.

The pump fluid may transport the thermal energy from the first thermal energy exchanging device to the second thermal energy exchanging device or vice versa. The thermal energy may be accordingly dissipated to the corresponding first and/or second energy transporting fluid.

In some examples, the first fluid flow channel may form part of a first fluid flow circuit through which the first thermal energy transporting fluid circulates to transport thermal energy from the first element to the heat exchanging device of the heat pump unit. Likewise, the second fluid flow channel may form part of a second fluid flow circuit through which the second thermal energy transporting fluid circulates to transport thermal energy from the second element to another heat exchanging device of the heat pump unit. The respective heat exchanging devices may accordingly transfer the thermal energy between the first thermal energy transporting fluid and the second thermal energy transporting fluid, while no exchange of energy-carrying medium, for example fluid, occurs. This may advantageously allow to provide individual flow circuits of heat transporting fluids, which may further increase the flexibility in the design of the device.

In some examples, the first element and/or the second element may comprise fluid connections or fluid interfaces. Thus, at a first fluid connection or at a first fluid interface, which may be referred to as an inflow interface of the first and/or second fluid flow channel, an inflow of a first and/or second thermal energy transporting fluid into the respective fluid flow channel may be provided. The fluid may then be guided through the respective fluid flow channel and may accordingly absorb heat, transferred either from the energy storage unit to the first element or from the surrounding of the vehicle to the second element. The thus heated fluid may then be discharged from the fluid flow channel at a second fluid connection or fluid interface, which may be referred to as an outflow interface. The discharged heated fluid may accordingly flow to the heat pump unit, wherein it may release the transported heat and accordingly cool down again. The thus cooled thermal energy transporting fluid may then be guided back again to the respective fluid flow channel. Consequently, dependent on the thermal energy transfer direction, the energy storage unit may be reliably heated or cooled, as desired.

In one example, the heat pump unit comprises an evaporator and a condenser, wherein the device further comprises a valve unit configured to couple the first element to the evaporator and the second element to the condenser or to couple the second element to the evaporator and the first element to the condenser.

Thus, an effective thermal energy transporting circuit may be provided. Different types of heat pump fluids may be employed in the device, for instance dependent on the configuration of the evaporator in the condenser. This increases the flexibility in the design of the heat pump unit.

An evaporator may be any device that may allow a heat pump fluid to change a phase state from liquid state to a gaseous state by taking up thermal energy. For instance, the heat pump fluid may be guided along a heat emitting surface arranged inside the evaporator to allow a thermal energy uptake and a conversion to a gaseous state. The heat emitting surface may be heated by a heated first or second thermal energy transporting fluid.

A condenser may be any device that may allow a heat pump fluid to change a phase state from a gaseous state to a liquid sate by releasing thermal energy. For instance, the heat pump fluid may be guided along a heat absorbing surface arranged inside the condenser to allow a thermal energy release of the heat pump fluid and a conversion to a liquid state. The heat absorbing surface may be cooled by a cooled first or second thermal energy transporting fluid.

A valve unit may comprise one or more valves or other fluid guiding means that may allow to couple the first element to the evaporator and the second element to the condenser. Thus, the first thermal energy transporting fluid may be guided from the first element to the evaporator, wherein the first thermal energy transporting fluid may dissipate or release thermal energy and accordingly cool down. The valve unit may then guide back the thus cooled down first thermal energy transporting fluid to the first element. Likewise, the second thermal energy transporting fluid may be guided from the second element to the condenser, wherein the second thermal energy transporting fluid may take up thermal energy and accordingly heat up. The valve unit may then guide back the thus heated up second thermal energy transporting fluid to the second element.

In a different configuration, the valve unit may allow to couple the first element to the condenser and the second element to the evaporator. Thus, the first thermal energy transporting fluid may be guided from the first element to the condenser, wherein the first thermal energy transporting fluid may take up thermal energy and accordingly heat up. The valve unit may then guide back the thus heated up first thermal energy transporting fluid to the first element. Likewise, the second thermal energy transporting fluid may be guided from the second element to the evaporator, wherein the second thermal energy transporting fluid may dissipate or release thermal energy and accordingly cool down. The valve unit may accordingly guide back the thus cooled down second thermal energy transporting fluid to the second element.

Thus, a switching of the thermal energy transfer direction may be provided and the first and second elements may be heated up or cooled down, as desired.

In one example, the first element comprises a condenser and the second element comprises an evaporator, or the first element comprises an evaporator and the second element comprises a condenser.

Thus, an immediate or direct heat exchange between the first element and the second element may be provided, which may allow to omit the provision of an additional heat pump unit. Thus, the device may be simplified and provided in a compact manner.

In some examples, a single thermal energy transporting fluid cycle comprising only one thermal energy transporting fluid may be provided for both, the first and the second elements.

In one example, the thermal energy transporting fluid may be guided to the condenser of the first element, wherein it may dissipate or release thermal energy towards the energy storage unit. Thus, the thermal energy transporting fluid may be cooled down and the energy storage unit may be heated. The cooled down thermal energy transporting fluid may then be guided to the evaporator of the second element, wherein it may take up thermal energy from the surrounding of the vehicle.

In another example, the thermal energy transporting fluid may be guided to the condenser of the second element, wherein it may dissipate or release thermal energy towards the surrounding of the vehicle. Thus, the thermal energy transporting fluid may be cooled down. The cooled down thermal energy transporting fluid may be then guided to the evaporator of the first element, wherein it may take up thermal energy from the energy storage unit. Thus, the energy storage unit may be cooled.

In some examples, a switching of the thermal energy transfer direction may be provided and the first and second elements may be accordingly heated up or cooled down, as desired.

In some examples, one or more fluid pumps may be provided for pumping the corresponding one or more heat transporting fluids into a certain direction. For instance, the pumping direction of a fluid pump may be changed, e.g. inverted, such that the heat transporting fluid flows into a different, e.g. opposite, direction. Or, two fluid pumps may be provided, wherein each pump pumps the heat transporting fluid into a single certain direction. These directions are oriented opposite to one another.

In a second aspect, there is provided an energy storage arrangement for a vehicle comprising the device according to the present disclosure, and at least one energy storage unit of a vehicle thermally coupled to the first element.

Thus, an energy storage arrangement of a vehicle may be suitably set to a desired temperature by heating or cooling the energy storage unit based on a thermal coupling with the surrounding of the vehicle.

In some examples, the energy storage unit may be arranged below the device in an essentially vertical direction. Alternatively, the energy storage unit may be arranged above the device in an essentially vertical direction.

In some examples, the energy storage arrangement may comprise an enclosure, which covers at least partially the device and/or the energy storage unit.

In some examples, further heating and cooling means may be provided to heat and/or cool the energy storage unit.

Generally, the features and advantages explained herein with respect to the device likewise apply to the energy storage arrangement of the present disclosure and vice versa.

In a third aspect, there is provided a vehicle comprising the device according to the present disclosure or the energy storage arrangement according to the present disclosure.

Thus, a vehicle may be provided having an improved temperature control or regulation of the energy storage unit. The advantageous heating or cooling of the energy storage unit by the device according to the present disclosure based on respective energy transfer with the surrounding may provide an efficient energy storage unit heat management.

In some examples, undesired thermal energy losses of the energy storage unit may be prevented and the thermal energy of the surrounding may be suitably employed for heating the energy storage unit in an efficient way since the thermal energy from the surrounding of the vehicle may be (re-)used instead of thermal energy generated by different sources, such as electric sources or combustion-based sources.

In some examples, undesired thermal energy of the energy storage unit may be withdrawn, meaning that the temperature of the energy storage unit is lowered, and the surrounding may be suitably employed for cooling the energy storage unit in an efficient way since the thermal energy from the energy storage unit may be transferred to the surrounding of the vehicle. Cooling via other means, may be eliminated or at least reduced in size.

In some examples, the vehicle may comprise no additional means for heating or cooling the thermal energy unit, which may reduce manufacturing costs and may simplify the production the vehicle.

In some examples, further means for heating or cooling the energy storage unit may be provided in addition to the device to provide a further improved thermal management of the energy storage unit.

In some examples, the vehicle may be an electrically driven vehicle comprising a vehicle battery, which battery temperature is managed by the device according to the present disclosure.

In some examples, the second element may form the bottom side or floor of the vehicle and may suitably provide a low-drag heat exchange surface of the vehicle. This may reduce drag losses during operation of the vehicle and thus may improve the overall energy efficiency of the vehicle.

Generally, the features and advantages explained herein with respect to the device and the energy storage arrangement likewise apply to the vehicle of the present disclosure and vice versa.

In a fourth aspect there is provided, a method for adapting a temperature of an energy storage unit of a vehicle, wherein the energy storage unit is thermally coupled to the device according to the present disclosure, the method comprising: determining an actual temperature of the energy storage unit and a target temperature of the energy storage unit, transferring thermal energy from the storage unit to the surrounding of the vehicle via the first element and the second element when the actual temperature of the energy storage unit is above the target temperature of the energy storage unit or transferring thermal energy from the surrounding of the vehicle to the energy storage unit via the second element and the first element when the actual temperature of the energy storage unit is below the target temperature of the energy storage unit.

Thus, a flexible and simple way of adapting or setting a temperature of an energy storage unit of the vehicle may be provided. A distinct target temperature of the energy storage unit may be achieved by transferring thermal energy from or towards the storage unit and/or from and towards the surrounding of the vehicle. Accordingly, further means for adapting a temperature of the energy storage unit may be omitted, which may simplify and increase robustness of the heat management. The temperature of the first element may be set to an optimal level for operation and performance of the energy storage unit, for instance with respect to its compounds and chemistry.

In some examples, one or more temperature sensors or detectors may be provided at the vehicle to detect a temperature. For instance, an energy storage unit temperature detector may be provided to detect a temperature of the energy storage unit, a first element temperature detector may be provided to detect a temperature of the first element, a second element temperature detector may be provided to detect a temperature of the second element, and/or a vehicle surrounding temperature detector may be provided to detect a temperature of the vehicle surrounding. The determined temperatures may be used to optimize a thermal energy transfer towards and away from the energy storage unit of the vehicle.

Accordingly, the first element may heat the energy storage unit via the heat transfer based on thermal energy of the surrounding of the vehicle. Similarly, when the energy storage unit is cooled by the first element, the second element temperature may be set higher than the temperature of the surrounding of the vehicle to allow a transfer of heat into the ambient or surrounding. Thus, an improved thermal management of the vehicle may be achieved.

In some examples, the method may comprise calculating, by a data computing means, or data processing apparatus, of the vehicle, a suitable fluid flow of the one or more energy transporting fluids of the device. In some examples, the method may comprise to control the pumps and/or valves to control the fluid flow and/or an energy transfer accordingly to achieve the desired target temperature of the energy storage unit.

Generally, the features and advantages explained herein with respect to the device, the energy storage arrangement and the vehicle likewise apply to the method of the present disclosure and vice versa.

In one example, the method comprises determining a temperature of the surrounding of the vehicle, determining a temperature of the second element, and wherein transferring thermal energy from the vehicle storage unit to the surrounding of the vehicle comprises maintaining the temperature of the second element higher than the temperature of the surrounding. Thus, thermal energy is transferred from the first element to the second element and from the second element to the surrounding.

Thus, a proper cooling of the vehicle storage unit may be achieved by the second element, which may be accordingly controlled to emit thermal energy to the surrounding of the vehicle.

In some examples, the second element may be set to a temperature above a temperature of the surrounding of the vehicle to allow a heat dissipation by the second element. For instance, the second element may be set to a temperature of 5 to 10 K above the temperature of the surrounding of the vehicle.

In one example, the method comprises determining a temperature of the surrounding of the vehicle, determining a temperature of the second element, and wherein transferring thermal energy from the surrounding of the vehicle to the energy storage unit comprises maintaining the temperature of the second element lower than the temperature of the surrounding. Thus, thermal energy is transferred from the surrounding to the second element and from the second element to the first element.

Thus, a proper heating of the vehicle storage unit may be achieved by taking up thermal energy by the second element from the surrounding of the vehicle and transfer said thermal energy to heat the energy storage unit.

In some examples, the second element may be set to a temperature below a temperature of the surrounding of the vehicle two allow a heat uptake by the second element. For instance, the second element may be set to a temperature of 5 to 10 K below the temperature of the surrounding of the vehicle.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: schematically shows an example of a vehicle according to the present disclosure;
- Figure 2: schematically shows an example of a device according to the present disclosure for adapting a temperature of an energy storage unit of a vehicle;
- Figure 3: schematically shows an example of a device according to the present disclosure for adapting a temperature of an energy storage unit of a vehicle;
- Figure 4: schematically shows an example of a device according to the present disclosure for adapting a temperature of an energy storage unit of a vehicle;
- Figure 5: schematically shows a flowchart of an example of a method according to the present disclosure.

### DETAILED DESCRIPTION

The figures are merely schematic representations and serve only to illustrate examples of the disclosure. Identical or equivalent elements are in principle provided with the same reference signs.

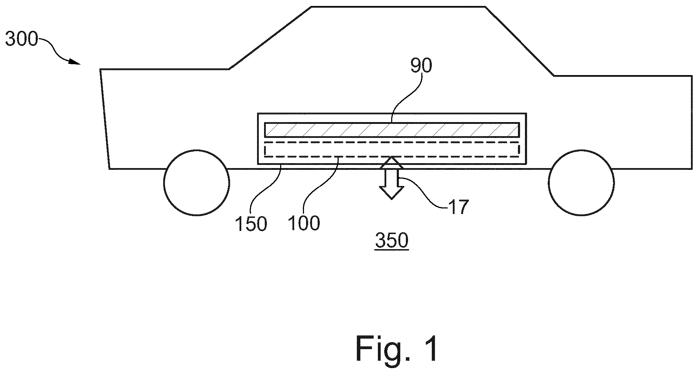

Figure 1 shows an example of a vehicle 300 comprising an energy storage arrangement 150 according to the present disclosure.

The energy storage arrangement 150 comprises a device 100 according to the present disclosure and an energy storage unit 90 of the vehicle 300.

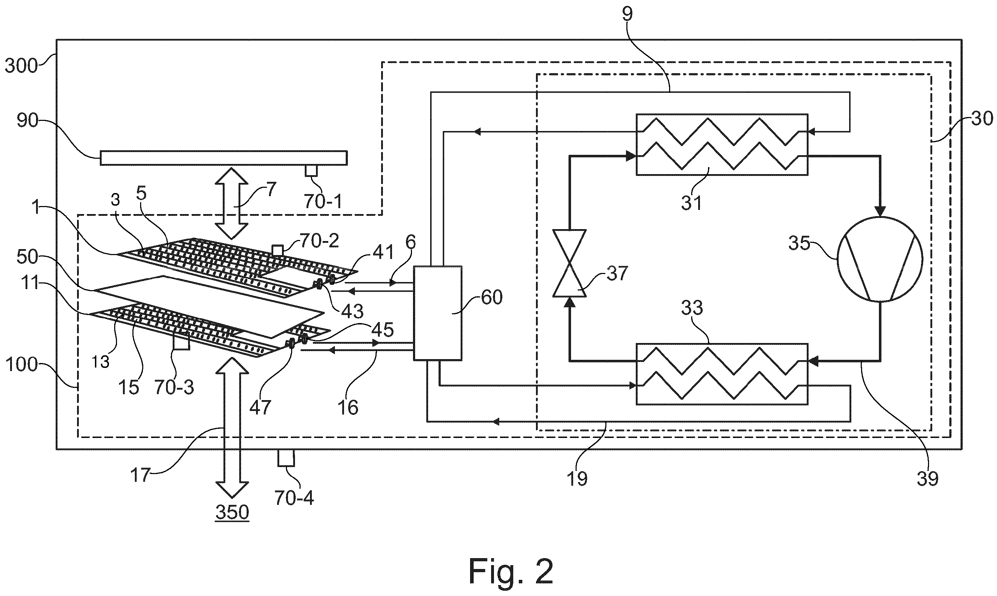

In the depicted example, the device 100 may allow a thermal energy or heat exchange with a surrounding 350 or environment of the vehicle 300, as indicated by the double arrow 17. The energy storage unit 90 is arranged above the device 100 in a vertical direction, when the vehicle 300 is oriented in a standard operation direction. As is depicted and will be explained in further detail in figures 2, 3 or 4, the device 100 is also adapted to exchange thermal energy with the energy storage unit 90. Thus, thermal energy could be transported from the surrounding 350 of the vehicle 300 via the device 100 to the energy storage unit 90 if the energy storage unit 90 should be heated. Or, thermal energy could be transported away from the energy storage unit 90 via the device 100 to the surrounding 350 of the vehicle 300 if the energy storage unit 90 should be cooled.

Figure 2 shows an example of a device 100 for adapting a temperature of an energy storage unit 90 of a vehicle 300 according to the present disclosure. In the depicted example, the device 100 is adapted on the one hand to exchange thermal energy or heat with the energy storage unit 90, as illustrated by the double arrow 7 and, on the other hand, the device 100 is adapted to exchange thermal energy with a surrounding 350 of the vehicle, as illustrated by the double arrow 17.

The device 100 comprises a first element 1, which is thermally coupled to the energy storage unit 90.

Further, the device 100 comprises a second element 11, which is thermally coupled to the surrounding 350 of the vehicle 300.

The first element 1 is thermally coupled to the second element 11 to allow an energy transfer between the surrounding 350 of the vehicle 300 and the energy storage unit 90. That is, in a first configuration, thermal energy could be taken-up from the surrounding 350 of the vehicle 300 by the second element 11. From the second element 11, the thermal energy could be transferred to the first element 1 and from the first element 1, the thermal energy could be transferred further to the energy storage unit 90.

Accordingly, the energy storage unit 90 may be heated up by the first element 1.

Likewise, in a second configuration, thermal energy could be taken-up from the energy storage unit 90 by the first element 1. From the first element 1, the thermal energy could be transferred to the second element 11 and from the second element 11, the thermal energy could be transferred further to the surrounding 300 of the vehicle 350. Accordingly, the energy storage unit 90 may be cooled by the first element 1.

Even though it is depicted for illustrative reasons that the energy storage unit 90 and the first element 1 are spaced apart, it should be understood that the energy storage unit 90 may be well arranged in an immediate vicinity of the first element 1 for improving a direct thermal energy exchange, i.e. such that the first element 1 contacts the energy storage unit 90.

Likewise, even though it is depicted for illustrative reasons that the surrounding 350 of the vehicle 300 and the second element 11 are spaced apart, it may be understood that the second element 11 may also be well arranged in an immediate vicinity of surrounding 350 for improving a direct thermal energy exchange. i.e. such that the second element 11 contacts the surrounding 350.

The device 100 further comprises a heat-pump unit 30 which includes a thermal energy transporting heat pump fluid 39 circulating successively through an evaporator 31, a compressor 35, a condenser 33, and an expansion valve unit 37.

The first element 1 comprises a first fluid flow channel 5 through which a first thermal energy transporting fluid 6 flows. The first element 1 comprises a first outlet 41, through which the first thermal energy transporting fluid 6 may outflow from the first element 1 towards the evaporator 31 of the heat pump unit 30 via a valve unit 60 along a fluid path of the first fluid flow cycle 9. Each fluid flow described herein may be achieved by one or more fluid pumps (not depicted) which are then operatively coupled to the device 100.

From the evaporator 31, the first thermal energy transporting fluid 6 flows back to the first element 1 via the valve unit 60 along a fluid path of first fluid flow cycle 9. The first thermal energy transporting fluid 6 may accordingly flow into the first element 1 via a first inlet 43.

The second element 11 comprises a second fluid flow channel 15 through which a second thermal energy transporting fluid 16 flows.

The second element 11 comprises a second outlet 45, through which the second thermal energy transporting fluid 16 may outflow from the second element 11 towards the condenser 33 of the heat pump unit 30 via the valve unit 60 along a fluid path of the second fluid flow cycle 19.

From the condenser 33, the second thermal energy transporting fluid 16 flows back to the second element 11 via the valve unit 60 along a fluid path of the second fluid flow cycle 19. The second thermal energy transporting fluid 16 may accordingly flow into the second element 11 via a second inlet 47.

At the evaporator 31 of the heat pump unit 30, the first thermal energy transporting fluid 6 may transfer thermal energy to the heat pump fluid 39, which is accordingly heated up. The thus heated heat pump fluid 39 is transferred further and compressed by a compressor 35 of the heat pump unit 30 and fed to the condenser 33. At the condenser 33, the compressed heated heat pump fluid 39 transfers its thermal energy to the second thermal energy transporting fluid 16 and is accordingly cooled down. The thus cooled down heat pump fluid 39 is transferred further and expanded by an expansion valve unit 37. From the expansion valve unit 37 the expanded cooled down fluid 37 is fed back to the evaporator 31.

The device 100 comprises a valve unit 60, which is depicted in a configuration, where it couples the first element 1 to the evaporator 31 and the second element 11 to the condenser 33 such that thermal energy can be transferred from energy storage unit 90 to the first element 1 and further to the second element 11 via the heat pump unit 30, where it can be released to the vehicle surrounding 350.

In a different configuration of the device 100, the valve unit 60 may couple the second element 11 to the evaporator 31 and the first element 1 to the condenser 33 such that thermal energy can be transferred from the vehicle surrounding 350 to the second element 11 and further to the first element 1 via the heat pump unit 30, where it can be released to the energy storage unit 90.

In the present example, the valve unit 60 may be selectively switched between a state in which the valve unit 60 couples the first element 1 to the evaporator 31 and the second element 11 to the condenser 33 and a state in which the valve unit 60 couples the second element 11 to the evaporator 31 and the first element 1 to the condenser 33.

Thus, the temperature of the energy storage unit 90 may be managed or controlled by the device 100.

In a different example (not depicted), the device 100 may realize an immediate or direct heat exchange between the first element 1 and the second element 11, wherein the first element 1 comprises a condenser 33 and wherein the second element 11 comprises an evaporator 31, or wherein the first element 1 comprises an evaporator 31 and wherein the second element 11 comprises a condenser 33. Also this example, thermal energy can be transferred from energy storage unit 90 to the first element 1 and further to the second element 11, where it can be released to the vehicle surrounding 350, or from the vehicle surrounding 350 to the second element 11 and further to the first element 1, where it can be released to the energy storage unit 90.

Further, in the depicted example, a plurality of temperature detectors 70 are provided to detect a respective temperature, namely an energy storage unit temperature detector 70-1 to detect a temperature of the energy storage unit 90, a first element temperature detector 70-2 to detect a temperature of the first element 1, a second element temperature detector 70-3 to detect a temperature of the second element 11, and a vehicle surrounding temperature detector 70-4 to detect a temperature of the vehicle surrounding 350.

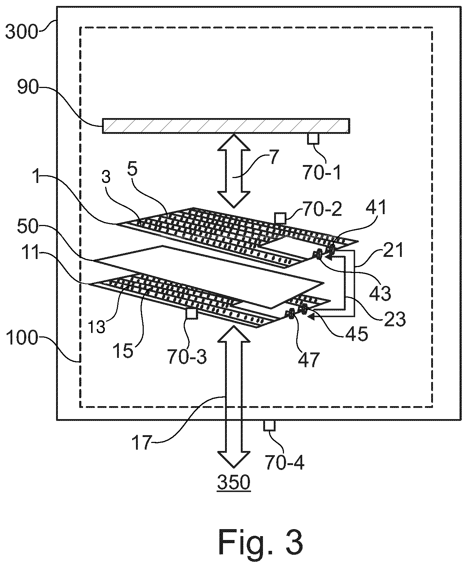

Figure 3 shows another example of a device 100 for adapting a temperature of an energy storage unit 90 of a vehicle 300 according to the present disclosure. The device 100 shown in figure 3 basically corresponds to the device 100 shown in figure 2 with the difference that the first element 1 and the second element 11 are thermally directly connected to each other, i.e. no heat pump unit 39 is provided and only one fluid flow cycle is formed.

In this example, the first outlet 41 of the first element 1 is directly connected to the second inlet 47 of the second element 11 via a first connection channel 21 for guiding a thermal energy transporting fluid from the first element 1 to the second element 11. Further, the second outlet 45 of the second element 11 is directly connected to the first inlet 43 of the first element 1 via a second connection channel 23 for guiding the thermal energy transporting fluid from the second element 1 to the first element 11.

In this example, the thermal energy transporting fluid may be heated up for instance by thermal energy transferred from the surrounding 350 of the vehicle 300 to the second element 11. The thus heated up thermal energy transporting fluid is guided from the second element 11 to the first element 1 via the second connection channel 23. The thermal energy is then transferred from the first element 1 to the energy storage unit 90 and accordingly the temperature of the first element 1 is lowered whereas the temperature of the energy storage unit 90 is increased. The cooled down thermal energy transporting fluid is then guided back to the second element 11 via the first connection channel 21. However, the thermal energy transfer may of course also be performed in an opposite direction such that thermal energy is transferred from the energy storage unit 90 to the surrounding 350 of the vehicle 300.

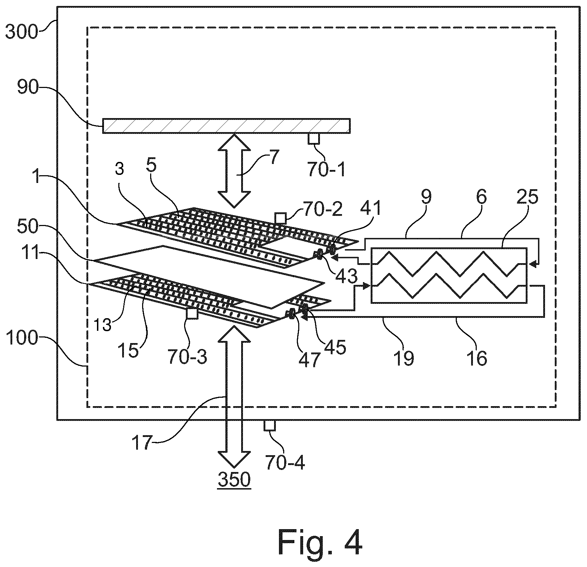

Figure 4 shows another example of a device 100 for adapting a temperature of an energy storage unit 90 of a vehicle 300 according to the present disclosure. The device 100 shown in figure 4 basically corresponds to the device 100 shown in figure 2 with the difference that the first element 1 and the second element 11 are thermally connected with each other via a heat exchanger 25, i.e. no heat pump unit 39 is provided.

In this example, a first thermal energy transporting fluid 6 may outflow from the first outlet 41 of the first element 1 towards a heat exchanger 25 along a fluid path of a first fluid flow cycle 9. From the heat exchanger 25, the first thermal energy transporting fluid 6 flows back into the first element 1 via a first inlet 43.

Further, a second thermal energy transporting fluid 16 may outflow from the second outlet 47 of the second element 11 towards the heat exchanger 25 along a fluid path of a second fluid flow cycle 19. From the heat exchanger 25, the second thermal energy transporting fluid 16 flows back into the second element 11 via a second inlet 47.

The first fluid flow cycle 9 and second fluid flow cycle 16 are separate fluid flow cycles. Accordingly, no energy-carrying medium is exchanged or transferred between the first fluid flow cycle 9 and the second fluid flow cycle 16 of the heat exchanger 25.

In this example, the second thermal energy transporting fluid 16 may be heated up for instance by thermal energy transferred from the surrounding 350 of the vehicle 300 to the second element 11. The thus heated up second thermal energy transporting fluid 16 is guided from the second element 11 to the heat exchanger 25. In the heat exchanger 25, the thermal energy is then transferred to the first thermal energy transporting fluid 6 of the first fluid flow cycle 9. The thus cooled down second thermal energy transporting fluid 16 is then guided back to the second element 11.

The heated up first thermal energy transporting fluid 6 is guided from the heat exchanger 25 to the first element 1, where it transfers the thermal energy to the energy storage unit 90 and accordingly cools down. The thus cooled down first thermal energy transporting fluid 6 is then guided back to the heat exchanger 25.

However, the thermal energy transfer may of course also be performed in an opposite direction such that thermal energy is transferred from the energy storage unit 90 to the surrounding 350 of the vehicle 300.

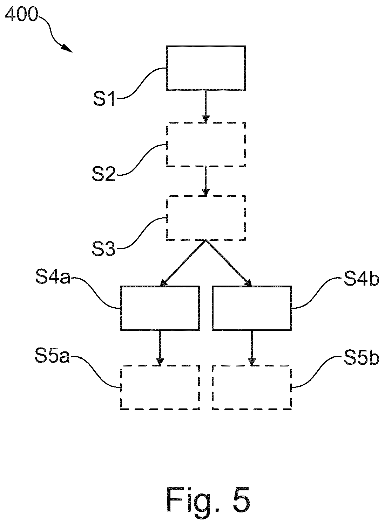

Fig. 5 schematically shows a flowchart of an example of a method 400 for adapting or managing a temperature of an energy storage unit 90 of a vehicle 300. The method 400 comprises the step S1 of determining an actual temperature of the energy storage unit 90 and a target temperature of the energy storage unit 90.

The method 400 further comprises the optional step S2 of determining a temperature of the surrounding 350 of the vehicle 300.

Further, the method 400 further comprises the optional step S3 of determining a temperature of the second element 11.

The method 400 further comprises the step S4a of transferring thermal energy from the storage unit 90 to the surrounding 350 of the vehicle 300 via the first element 1 and the second element 11 if the actual temperature of the energy storage unit 90 is above the target temperature of the energy storage unit 90. The method 400 further comprises the alternative step S4b of transferring thermal energy from the surrounding 350 of the vehicle 300 to the energy storage unit 90 via the second element 11 and the first element 1 if the actual temperature of the energy storage unit 90 is below the target temperature of the energy storage unit 90.

As is depicted, the step S4a of transferring thermal energy from the vehicle storage unit 90 to the surrounding 350 of the vehicle 300 may further comprise the optional step S5a of maintaining the temperature of the second element 11 higher than the temperature of the surrounding 350 such that a heat transfer from the second element 11 to the surrounding 350 is generated.

Or, the step S4b of transferring thermal energy from the surrounding 350 of the vehicle 300 to the energy storage unit 90 comprises the optional step S5b of maintaining the temperature of the second element 11 lower than the temperature of the surrounding 350 such that a heat transfer from the surrounding 350 to the second element 11 is generated.

The order of the above noted steps of the example could also be exchanged or the steps could be performed simultaneously, as desired.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 1: first element
- 3: first plate shaped portion
- 5: first fluid flow channel
- 6: first thermal energy transporting fluid
- 7: first thermal energy exchange
- 9: first fluid flow cycle
- 11: second element
- 13: second plate shaped portion
- 15: second fluid flow channel
- 16: second thermal energy transporting fluid
- 17: second thermal energy exchange
- 19: second fluid flow cycle
- 21: first connection channel
- 23: second connection channel
- 25: heat exchanger
- 30: heat pump unit
- 31: evaporator
- 33: condenser
- 35: compressor
- 37: expansion valve unit
- 39: heat pump fluid
- 41: first outlet
- 43: first inlet
- 45: second outlet
- 47: second inlet
- 50: thermal barrier
- 60: valve unit
- 70: temperature detector
- 90: energy storage unit
- 100: device
- 150: energy storage arrangement
- 300: vehicle
- 350: vehicle surrounding
- 400: method
- S1 to S5: method steps

## Claims

1. A device (100) for adapting a temperature of an energy storage unit (90) of a vehicle (300), the device (100) comprising:
a first element (1) thermally couplable to the energy storage unit (90), and
a second element (11) thermally couplable to a surrounding (350) of the vehicle (300),
wherein the first element (1) is coupled to the second element (11) to allow an energy transfer between the surrounding (350) of the vehicle (300) and the energy storage unit (90) via the first element (1) and the second element (11),
wherein the first element (1) comprises a first plate-shaped portion (3) arrangeable adjacent to the energy storage unit (90),
**characterized in that**
the second element (11) comprises a second plate-shaped portion (13) arrangeable adjacent to the surrounding (350) of the vehicle (300), and
wherein the first plate-shaped (3) portion and the second plate-shaped portion (13) are arranged in a stacked manner.

2. The device (100) according to the preceding claim,
wherein the first element (1) and the second element (11) are thermally coupled.

3. The device (100) according to one of the preceding claims,
wherein the device (100) further comprises at least one thermal barrier (50) arranged between the first element (1) and the second element (11),
wherein the thermal barrier (50) is adapted to prevent a direct heat exchange between the first element (1) and the second element (11).

4. The device (100) according to one of the preceding claims,
wherein the first element (1) comprises at least one first fluid flow channel (5) for guiding at least one first thermal energy transporting fluid (6), and
wherein the second element (11) comprises at least one second fluid flow channel (15) for guiding at least one second thermal energy transporting fluid (16).

5. The device (100) of claim 4, wherein the first fluid flow channel (5) and the second fluid flow channel (15) are in fluid connection.

6. The device (100) of any one of the preceding claims, wherein the first element (1) and the second element (11) are thermally coupled via a heat pump unit (30).

7. The device (100) of claim 4 or 5 and claim 6, wherein the first fluid flow channel (5) and the second fluid flow channel (15) are thermally coupled via the heat pump unit (30).

8. The device (100) according to claim 6 or 7,
wherein the heat pump unit (30) comprises an evaporator (31) and a condenser (33),
wherein the device (100) further comprises a valve unit (60) configured to couple the first element (1) to the evaporator (31) and the second element (11) to the condenser (33) or to couple the second element (11) to the evaporator (31) and the first element (1) to the condenser (33).

9. The device (100) according to one of claims 1 to 5,
wherein the first element (1) comprises a condenser (33) and wherein the second element (11) comprises an evaporator (31), or
wherein the first element (1) comprises an evaporator (31) and wherein the second element (11) comprises a condenser (33).

10. An energy storage arrangement (150) for a vehicle (300) comprising
the device (100) according to one of claims 1 to 9, and
at least one energy storage unit (90) of a vehicle (300) thermally coupled to the first element (1).

11. A vehicle (300) comprising the device (100) according to one of claims 1 to 9 or the energy storage arrangement (150) according to claim 10.

12. A method (400) for adapting a temperature of an energy storage unit (90) of a vehicle (300), wherein the energy storage unit (90) is thermally coupled to the device (100) according to one of the claims 1 to 9, the method (400) comprising:
determining (S1) an actual temperature of the energy storage unit (90) and a target temperature of the energy storage unit (90),
transferring (S4a) thermal energy from the storage unit (90) to the surrounding (350) of the vehicle (300) via the first element (1) and the second element (11) if the actual temperature of the energy storage unit (90) is above the target temperature of the energy storage unit (90), or
transferring (S4b) thermal energy from the surrounding (350) of the vehicle (300) to the energy storage unit (90) via the second element (11) and the first element (1) if the actual temperature of the energy storage unit (90) is below the target temperature of the energy storage unit (90).

13. The method (400) of claim 12, further comprising:
determining (S2) a temperature of the surrounding (350) of the vehicle (300),
determining (S3) a temperature of the second element (11), and
wherein transferring (S4a) thermal energy from the vehicle storage unit (90) to the surrounding (350) of the vehicle (300) comprises maintaining the temperature of the second element (11) higher than the temperature of the surrounding (350).

14. The method (400) of claim 12, further comprising:
determining (S2) a temperature of the surrounding (350) of the vehicle (300),
determining (S3) a temperature of the second element (11), and
wherein transferring (S4b) thermal energy from the surrounding (350) of the vehicle (300) to the energy storage unit (90) comprises maintaining the temperature of the second element (11) lower than the temperature of the surrounding (350).

## Patentansprüche

1. Vorrichtung (100) zum Anpassen einer Temperatur einer Energiespeichereinheit (90) eines Fahrzeugs (300), wobei die Vorrichtung (100) umfasst:
ein erstes Element (1), das thermisch mit der Energiespeichereinheit (90) gekoppelt werden kann, und
ein zweites Element (11), das thermisch mit einer Umgebung (350) des Fahrzeugs (300) koppelbar ist,
wobei das erste Element (1) mit dem zweiten Element (11) gekoppelt ist, um eine Energieübertragung zwischen der Umgebung (350) des Fahrzeugs (300) und der Energiespeichereinheit (90) über das erste Element (1) und das zweite Element (11) ermöglicht wird,
wobei das erste Element (1) einen ersten plattenförmigen Abschnitt (3) umfasst, der benachbart zur Energiespeichereinheit (90) anordenbar ist,
**dadurch gekennzeichnet, dass** das zweite Element (11) einen zweiten plattenförmigen Abschnitt (13) umfasst, der benachbart zur Umgebung (350) des Fahrzeugs (300) anordenbar ist, und
wobei der erste plattenförmige Abschnitt (3) und der zweite plattenförmige Abschnitt (13) stapelartig angeordnet sind.

2. Vorrichtung (100) nach dem vorhergehenden Anspruch, wobei das erste Element (1) und das zweite Element (11) thermisch gekoppelt sind.

3. Vorrichtung (100) nach einem der vorhergehenden Ansprüche,
wobei die Vorrichtung (100) ferner mindestens eine zwischen dem ersten Element (1) und dem zweiten Element (11) angeordnete thermische Barriere (50) umfasst, wobei die thermische Barriere (50) dazu angepasst ist, einen direkten Wärmeaustausch zwischen dem ersten Element (1) und dem zweiten Element (11) zu verhindern.

4. Vorrichtung (100) nach einem der vorhergehenden Ansprüche,
wobei das erste Element (1) mindestens einen ersten Fluidströmungskanal (5) zum Leiten mindestens eines ersten thermische Energie transportierenden Fluids (6) umfasst und
wobei das zweite Element (11) mindestens einen zweiten Fluidströmungskanal (15) zum Leiten mindestens eines zweiten thermische Energie transportierenden Fluids (16) umfasst.

5. Vorrichtung (100) nach Anspruch 4, wobei der erste Fluidströmungskanal (5) und der zweite Fluidströmungskanal (15) in Fluidverbindung stehen.

6. Vorrichtung (100) nach einem der vorhergehenden Ansprüche, wobei das erste Element (1) und das zweite Element (11) über eine Wärmepumpeneinheit (30) thermisch gekoppelt sind.

7. Vorrichtung (100) nach Anspruch 4 oder 5 und Anspruch 6, wobei der erste Fluidströmungskanal (5) und der zweite Fluidströmungskanal (15) über die Wärmepumpeneinheit (30) thermisch gekoppelt sind.

8. Vorrichtung (100) nach Anspruch 6 oder 7,
wobei die Wärmepumpeneinheit (30) einen Verdampfer (31) und einen Kondensator (33) umfasst,
wobei die Vorrichtung (100) ferner eine Ventileinheit (60) umfasst, die so konfiguriert ist, dass sie das erste Element (1) mit dem Verdampfer (31) und das zweite Element (11) mit dem Kondensator (33) koppelt oder das zweite Element (11) mit dem Verdampfer (31) und das erste Element (1) mit dem Kondensator (33) koppelt.

9. Vorrichtung (100) nach einem der Ansprüche 1 bis 5,
wobei das erste Element (1) einen Kondensator (33) umfasst und wobei das zweite Element (11) einen Verdampfer (31) umfasst, oder
wobei das erste Element (1) einen Verdampfer (31) umfasst und wobei das zweite Element (11) einen Kondensator (33) umfasst.

10. Eine Energiespeicheranordnung (150) für ein Fahrzeug (300), umfassend
die Vorrichtung (100) gemäß einem der Ansprüche 1 bis 9 und
mindestens eine Energiespeichereinheit (90) eines Fahrzeugs (300), die thermisch mit dem ersten Element (1) gekoppelt ist.

11. Ein Fahrzeug (300) umfassend die Vorrichtung (100) gemäß einem der Ansprüche 1 bis 9 oder die Energiespeichervorrichtung (150) gemäß Anspruch 10.

12. Verfahren (400) zum Anpassen einer Temperatur einer Energiespeichereinheit (90) eines Fahrzeugs (300), wobei die Energiespeichereinheit (90) thermisch mit der Vorrichtung (100) gemäß einem der Ansprüche 1 bis 9 gekoppelt ist, wobei das Verfahren (400) umfasst:
Bestimmen (S1) einer Ist-Temperatur der Energiespeichereinheit (90) und einer Soll-Temperatur der Energiespeichereinheit (90),
Übertragen (S4a) von thermischer Energie von der Speichereinheit (90) an die Umgebung (350) des Fahrzeugs (300) über das erste Element (1) und das zweite Element (11), wenn die Ist-Temperatur der Energiespeichereinheit (90) über der Soll-Temperatur der Energiespeichereinheit (90) liegt, oder
Übertragen (S4b) von thermischer Energie aus der Umgebung (350) des Fahrzeugs (300) an die Energiespeichereinheit (90) über das zweite Element (11) und das erste Element (1), wenn die Ist-Temperatur der Energiespeichereinheit (90) unter der Soll-Temperatur der Energiespeichereinheit (90) liegt.

13. Verfahren (400) nach Anspruch 12, ferner umfassend:
Bestimmen (S2) einer Temperatur der Umgebung (350) des Fahrzeugs (300),
Bestimmen (S3) einer Temperatur des zweiten Elements (11) und
wobei das Übertragen (S4a) von thermischer Energie von der Speichereinheit (90) des Fahrzeugs an die Umgebung (350) des Fahrzeugs (300) das Aufrechterhalten der Temperatur des zweiten Elements (11) auf einem höheren Wert als der Temperatur der Umgebung (350) umfasst.

14. Verfahren (400) nach Anspruch 12, ferner umfassend:
Bestimmen (S2) einer Temperatur der Umgebung (350) des Fahrzeugs (300),
Bestimmen (S3) einer Temperatur des zweiten Elements (11) und
wobei das Übertragen (S4b) von Wärmeenergie von der Umgebung (350) des Fahrzeugs (300) zur Energiespeichereinheit (90) das Aufrechterhalten der Temperatur des zweiten Elements (11) unterhalb der Temperatur der Umgebung (350) umfasst.

## Revendications

1. Dispositif (100) pour adapter la température d'une unité de stockage d'énergie (90) d'un véhicule (300), le dispositif (100) comprenant :
un premier élément (1) pouvant être couplé thermiquement à l'unité de stockage d'énergie (90), et
un deuxième élément (11) pouvant être couplé thermiquement à un environnement (350) du véhicule (300),
dans lequel le premier élément (1) est couplé au deuxième élément (11) pour permettre un transfert d'énergie entre l'environnement (350) du véhicule (300) et l'unité de stockage d'énergie (90) via le premier élément (1) et le deuxième élément (11),
dans lequel le premier élément (1) comprend une première partie en forme de plaque (3) pouvant être disposée de manière adjacente à l'unité de stockage d'énergie (90),
**caractérisé en ce que**
le deuxième élément (11) comprend une deuxième partie en forme de plaque (13) pouvant être disposée de manière adjacente à l'environnement (350) du véhicule (300), et
dans lequel la première partie en forme de plaque (3) et la deuxième partie en forme de plaque (13) sont disposées de manière empilée.

2. Dispositif (100) selon la revendication précédente,
dans lequel le premier élément (1) et le deuxième élément (11) sont couplés thermiquement.

3. Dispositif (100) selon l'une des revendications précédentes,
dans lequel le dispositif (100) comprend en outre au moins une barrière thermique (50) disposée entre le premier élément (1) et le deuxième élément (11),
dans lequel la barrière thermique (50) est adaptée à empêcher un échange de chaleur direct entre le premier élément (1) et le deuxième élément (11).

4. Dispositif (100) selon l'une des revendications précédentes,
dans lequel le premier élément (1) comprend au moins un premier canal d'écoulement de fluide (5) pour guider au moins un premier fluide transporteur d'énergie thermique (6), et
dans lequel le deuxième élément (11) comprend au moins un deuxième canal d'écoulement de fluide (15) pour guider au moins un deuxième fluide transporteur d'énergie thermique (16).

5. Dispositif (100) selon la revendication 4, dans lequel le premier canal d'écoulement de fluide (5) et le deuxième canal d'écoulement de fluide (15) sont en communication fluidique.

6. Dispositif (100) selon l'une quelconque des revendications précédentes, dans lequel le premier élément (1) et le deuxième élément (11) sont couplés thermiquement via une unité de pompe à chaleur (30).

7. Dispositif (100) selon la revendication 4 ou 5 et la revendication 6, dans lequel le premier canal d'écoulement de fluide (5) et le deuxième canal d'écoulement de fluide (15) sont couplés thermiquement via l'unité de pompe à chaleur (30).

8. Dispositif (100) selon la revendication 6 ou 7,
dans lequel l'unité de pompe à chaleur (30) comprend un évaporateur (31) et un condenseur (33),
dans lequel le dispositif (100) comprend en outre une unité de vanne (60) configurée pour coupler le premier élément (1) à l'évaporateur (31) et le deuxième élément (11) au condenseur (33) ou pour coupler le deuxième élément (11) à l'évaporateur (31) et le premier élément (1) au condenseur (33).

9. Dispositif (100) selon l'une des revendications 1 à 5,
dans lequel le premier élément (1) comprend un condenseur (33) et dans lequel le deuxième élément (11) comprend un évaporateur (31), ou
dans lequel le premier élément (1) comprend un évaporateur (31) et dans lequel le deuxième élément (11) comprend un condenseur (33).

10. Agencement de stockage d'énergie (150) pour un véhicule (300) comprenant
le dispositif (100) selon l'une des revendications 1 à 9, et
au moins une unité de stockage d'énergie (90) d'un véhicule (300) couplée thermiquement au premier élément (1).

11. Véhicule (300) comprenant le dispositif (100) selon l'une des revendications 1 à 9 ou l'agencement de stockage d'énergie (150) selon la revendication 10.

12. Procédé (400) pour adapter la température d'une unité de stockage d'énergie (90) d'un véhicule (300), dans lequel l'unité de stockage d'énergie (90) est couplée thermiquement au dispositif (100) selon l'une des revendications 1 à 9, le procédé (400) consistant à :
déterminer (S1) une température réelle de l'unité de stockage d'énergie (90) et une température cible de l'unité de stockage d'énergie (90),
transférer (S4a) de l'énergie thermique de l'unité de stockage (90) vers l'environnement (350) du véhicule (300) via le premier élément (1) et le deuxième élément (11) si la température réelle de l'unité de stockage d'énergie (90) est supérieure à la température cible de l'unité de stockage d'énergie (90), ou
transférer (S4b) de l'énergie thermique de l'environnement (350) du véhicule (300) vers l'unité de stockage d'énergie (90) via le deuxième élément (11) et le premier élément (1) si la température réelle de l'unité de stockage d'énergie (90) est inférieure à la température cible de l'unité de stockage d'énergie (90).

13. Procédé (400) selon la revendication 12, consistant en outre à :
déterminer (S2) une température de l'environnement (350) du véhicule (300),
déterminer (S3) une température du deuxième élément (11), et
dans lequel le transfert (S4a) d'énergie thermique de l'unité de stockage du véhicule (90) vers l'environnement (350) du véhicule (300) comprend le fait de maintenir la température du deuxième élément (11) à une valeur supérieure à la température de l'environnement (350).

14. Procédé (400) selon la revendication 12, consistant en outre à :
déterminer (S2) une température de l'environnement (350) du véhicule (300),
déterminer (S3) une température du deuxième élément (11), et
dans lequel le transfert (S4b) d'énergie thermique de l'environnement (350) du véhicule (300) vers l'unité de stockage d'énergie (90) comprend le fait de maintenir la température du deuxième élément (11) à une valeur inférieure à la température de l'environnement (350).
